# EUROPEAN PATENT SPECIFICATION

(11) **EP 1 839 730 B1**
(45) Date of publication and mention of the grant of the patent: **05.12.2012**
(21) Application number: 07105134.6
(22) Date of filing: 28.03.2007
(51) Int. Cl.: B01D 71/34, B01D 67/00

(54) **Process for the preparation of microporous membranes made of polyvinylidenefluoride (PVDF)**
Verfahren zur Herstellung mikroporöser Membranen aus Polyvinylidenfluorid (PVDF)
Procédé pour la préparation de membranes microporeuses réalisées en poly(fluorure de vinylidène) (PVDF)

(30) Priority: 30.03.2006 IT MI20060601
(43) Date of publication of application: 03.10.2007
(73) Proprietor: GVS S.p.A., 40069 Zola Predosa (Bologna) (IT)
(72) Inventor: Gaeta, Soccorso, 40050 MONTE SAN PIETRO (Bologna) (IT); Sidari, Felice, 40128 Bologna (IT)
(74) Representative: Martegani, Franco

(56) References cited:
- GB-A- 2 285 010
- US-A- 4 384 047
- MOHAMED KHAYET ET. AL.: "Preparation and Characterization of Polyvinylidene Fluoride Membranes for Membrane Distillation" IND. ENG. CHEM. RES., vol. 40, 2001, pages 5710-5718, XP002412552
- LIAO-PING CHENG: "EFFECT OF TEMPERATURE ON THE FORMATION OF MICROPOROUS PVDF MEMBRANES BY PRECIPITATION FROM 1-OCTANOL/DMF/PVDF AND WATER/DMF/PVDF SYSTEMS" MACROMOLECULES, ACS, WASHINGTON, DC, US, vol. 32, no. 20, 8 September 1999 (1999-09-08), pages 6668-6674, XP007901180 ISSN: 0024-9297

## Description

The present invention relates to a process for the preparation of microporous membranes made of polyvinylidenefluoride (PVDF).

PVDF membranes are widely used in various filtration, separation processes and venting systems. Venting systems are systems in which the microporous membrane allows the passage of air but does not allow the passage of water.

It is evident however that there is a limit water pressure above which water passes through the pores of membranes. There is therefore great interest in producing membranes which, with the same pore dimensions, have high air flows and a high resistance to the passage of water.

The resistance to the passage of water is expressed in water column metres. Normally with an increase in the air flow, the water column decreases, i.e. water break-through resistance.

The state of the art describes various types of processes for the preparation of microporous membranes also to be used in venting systems.

The document US 6,126,826 (Pacheco) for example describes a method for the preparation of microporous membranes made of polyvinylidenefluoride (PVDF) which comprises the formation of a solution of the polymer in a liquid consisting of a solvent and a cosolvent. According to the Pacheco invention it is possible to prepare PVDF membranes having nominal pore dimensions of 0.02 to 6 microns characterized by a high water flow and consequently a low water break-through resistance. The document US 6,146,747 (Wang) describes a method for the preparation of microporous membranes made of polyvinylidenefluoride (PVDF), internally isotropic and highly asymmetrical characterized by high water flows, which comprises the formation of a solution of the polymer in a liquid consisting only of a solvent. The membranes produced according to this invention are also characterized by a low water break-through resistance.

The document US 2004/004324 (Stenberg) describes, analogously to US' 826, a method for the preparation of hydrophobic, gas-permeable, biocompatible membranes made of polyvinylidenefluoride (PVDF) which comprises the formation of a solution of polymer in a liquid consisting of a solvent or a mixture of several solvents. Analogously US 3,642,668 (Bailey) describes a method for the preparation of polyvinylidenefluoride (PVDF) microporous membranes which comprises the formation of a solution of the polymer in a solvent. These have limited water break-through resistance however. In order to increase the water passage resistance, Stenberg envisages a post-treatment of the membrane formed by means of a coating with a fluorinated acrylic polymer. Analogously, all the other processes described so far in US patents 5,217,802, 5,554,414, 5,342,434 and 5,462,586 require numerous additional passages to increase the water break-through resistance of PVDF or PTFE (ethylene polytetrafluoride) and are extremely costly.

A further example of method according to the prior art is in the article Khayet et al. "Preparation and Characterization of Polyvinylidene Fluoride Membranes for Membrane Distillation" (IND, ENG, CHEM, RES, Viol.40, 2001; pages 5710-5718), disclosing a process for the preparation of PVDF membranes starting from a casting solution comprising PVDF, N,N-dimethylacetamide (DMCA) as solvent and water as non-solvent.

Furthermore, GB 2285010 discloses a method of preparing a PVDF membrane for filtering viruses. The casting solution comprises PVDF, DMCA as solvent and isopropanol as non-solvent.

The Applicant has now surprisingly found that the particular process according to the present invention allows the drawbacks of the state of the art to be overcome.

In particular, the process according to the present invention allows a microporous membrane to be obtained which has an increased water break-through resistance, without reducing the air flow and also avoids post-treatment for improving the hydrorepellence. The process according to the present invention, in fact, does not require any post-treatment and allows the production of membranes having water passage resistance characteristics equivalent to those indicated in US patents 5,217,802, 5,554,414, 5,342,434 and 5,462,586.

An object of the present invention therefore relates to a process for the preparation of microporous membranes made of polyvinylidenefluoride (PVDF) which comprises the following passages:
a) preparation of a mixture of polymer (PVDF), solvent and non-solvent-1;
   wherein said mixture is selected from mixtures having the following composition:
   i) 18% of polyvinylidenefluoride (PVDF), 79.5% of dimethylacetamide (DMA) as solvent and 2.5% of hydrofluoro-ether (HFE) as non-solvent-1; ii) 18% of polyvinylidenefluoride (PVDF), 72% of dimethylacetamide (DMA) and 10% of hydrofluoro-ether (HFE); iii) 16% of polyvinylidenefluoride (PVDF), 74% of dimethylacetamide (DMA) and 10% of hydrofluoro-ether (HFE) and iv) 16% of polyvinylidenefluoride (PVDF), 69% of dimethylacetamide (DMA) and 15% of hydrofluoro-ether (HFE);
   b) bringing the mixture thus obtained to a temperature ranging from 15 to 80°C, for a time longer than 10 minutes;
   c) mixing of the mixture until dissolution of the polymer and formation of a solution;
   d) possible spreading of the solution thus obtained on a carrier or imbibition of the carrier in the solution thus obtained;
   e) immersion in a coagulation bath consisting of isopropyl alcohol as non-solvent-2 at a temperature ranging from 15°C to 70°C and subsequent formation of pores;
   f) extraction of the residual solvent and non-solvent-2 in water;
   g) drying of the membrane.

The main advantage of the process according to the present invention consists in the production of a membrane which is extremely interesting from an industrial point of view, as an increase equal to about 10% is obtained in the water break-thorugh resistance in the membrane with respect to the values obtained with a membrane prepared according to the processes described in the patents cited above or without the addition of a non-solvent-1, without reducing the air-flow. This result is specifically obtained thanks to the presence of the non-solvent-1 in the starting mixture.

A further advantage in using the non-solvent-1 in the initial polymeric solution is that it avoids posttreatment for improving the hydrorepellence and water break-through resistance.

An additional advantage of the process for the preparation of microporous membranes made of polyvinylidenefluoride (PVDF) according to the present invention is the following: by effecting the mixing of the system (solvent + polymer + non-solvent-1) at a preestablished temperature, rather than heating the already-formed solution to the same temperature, it is also possible to control the pore size.

In particular, in phase a) for the preparation of a mixture of polymer (PVDF) the solvent is dimethylacetamide (DMA). The non-solvent-1 is a convenient hydrofluoro-ether (HFE).

The spreading of the solution obtained in phase c) can be effected on a carrier made of non-woven fabric, on a carrier made of woven fabric or without a carrier.

In phase e) for immersion in a coagulation bath consisting of a non-solvent-2 and subsequent pore formation, the coagulation bath consists of a non-solvent-2 which is isopropanol.

The characteristics and advantages of a process according to the present invention will appear more evident from the following illustrative and non-limiting description, referring to the following examples.

### Example 1

A mixture of 18 parts by weight of polyvinylidenefluoride PVDF, 79.5 parts by weight of dimethylacetamide DMA and 2.5 parts by weight of hydrofluoro-ether HFE, was stirred at 25°C for two hours, until dissolution of the polymer and the formation of a solution.

The solution thus obtained was spread on a carrier made of non-woven fabric, by means of a laboratory spreader (Doctor Blade), with a thickness of 350 microns and subsequently immersed in a coagulation bath consisting of isopropyl alcohol at room temperature with extraction of the residual solvent and non-solvent-2 in water, at room temperature. The membrane was then dried at a temperature of 60°C for 2 hours.

The resulting membrane has pore dimensions of 0.2 microns, an air flow value equal to 5.6 l/minute 3.7 cm² @ 440 mmHg and a WBT equal to 25 mH₂O.

### Example 2 (comparative)

The procedure described in Example 1 was repeated, without HFE, i.e. the non-solvent-1, and therefore with a starting mixture consisting of 18 parts by weight of polyvinylidenefluoride (PVDF) and 82 parts by weight of dimethylacetamide DMA.

The resulting membrane has pore dimensions of 0.2 microns, an air flow value equal to 5.7 l/minute, 3.7 cm² @ 440 mmHg and a WBT equal to 22 mH₂O.

The lowering of the WBT (water break through) by 12% is evident, whereas the variation in the air flow is negligible (+1.8%).

### Example 3

A mixture of 18 parts by weight of polyvinylidenefluoride PVDF, 72 parts by weight of dimethylacetamide DMA and 10 parts by weight of hydrofluoro-ether HFE, was stirred at 55°C for two hours, until dissolution of the polymer and the formation of a solution.

The solution thus obtained was spread on a carrier made of non-woven fabric, by means of a laboratory spreader (Doctor Blade), with a thickness of 350 microns and subsequently immersed in a coagulation bath consisting of isopropyl alcohol with extraction of the residual solvent and non-solvent-2 in water, at room temperature. The membrane was then dried at a temperature of 60°C for 2 hours.

The resulting membrane has pore dimensions of 1.2 microns, an air flow value equal to 56 1/minute 3.7 cm² @ 440 mmHg and a WBT equal to 3.6 mH₂O.

### Example 4 (comparative)

The procedure described in Example 3 was repeated, without HFE, i.e. the non-solvent-1, and therefore with a starting mixture consisting of 18 parts by weight of polyvinylidenefluoride (PVDF) and 82 parts by weight of dimethylacetamide DMA.

The resulting membrane has pore dimensions of 1.2 microns, an air flow value equal to 63 l/minute, and a WBT equal to 2.1 mH₂O.

The lowering of the WBT (water break through) by 41.7% is evident.

### Example 5

A mixture of 16 parts by weight of polyvinylidenefluoride PVDF, 74 parts by weight of dimethylacetamide DMA and 10 parts by weight of hydrofluoro-ether HFE, was stirred at 55°C for two hours, until dissolution of the polymer and the formation of a solution.

The solution thus obtained was spread on glass (without a fabric carrier), by means of a laboratory spreader (Doctor Blade), with a thickness of 350 microns and subsequently immersed in a coagulation bath consisting of isopropyl alcohol with extraction of the residual solvent and non-solvent-2 in water, at room temperature. The non-supported membrane was then dried at a temperature of 60°C for 2 hours.

The resulting membrane has pore dimensions of 1.2 microns, an air flow value equal to 61 l/minute 3.7 cm² @ 440 mmHg and a WBT equal to 5.2 mH₂O.

### Example 6

The procedure described in Example 5 was repeated, in the presence of a different quantity of HFE, i.e. the non-solvent-1, and therefore with a starting mixture consisting of 16 parts by weight of polyvinylidenefluoride (PVDF), 69 parts by weight of dimethylacetamide DMA and 15 parts by weight of hydrofluoro-ether (HFE).

The resulting membrane has pore dimensions of 1.2 microns, an air flow value equal to 58 1/minute 3.7 cm² @ 440 mmHg, and a WBT equal to 6.2 mH₂O.

The increasing of the WBT (water break through) by 16.1% is evident.

### Example 7

A mixture of 16 parts by weight of polyvinylidenefluoride PVDF, 74 parts by weight of dimethylacetamide DMA and 10 parts by weight of hydrofluoro-ether HFE, was stirred at 60°C for two hours, until dissolution of the polymer and the formation of a solution.

The solution thus obtained was spread on glass (without a fabric carrier), by means of a laboratory spreader (Doctor Blade), with a thickness of 350 microns and subsequently immersed in a coagulation bath consisting of isopropyl alcohol with extraction of the residual solvent and non-solvent-2 in water, at room temperature. The non-supported membrane was then dried at a temperature of 60°C for 2 hours.

The resulting membrane has pore dimensions of 3 microns, an air flow value equal to 70 1/minute 3.7 cm² @ 440 mmHg and a WBT equal to 3.4 mH₂O.

### Example 8 (comparative)

The procedure described in Example 7 was repeated, without HFE, i.e. the non-solvent-1, and therefore with a starting mixture consisting of 16 parts by weight of polyvinylidenefluoride (PVDF) and 84 parts by weight of dimethylacetamide DMA.

The resulting membrane has pore dimensions of 3 microns, an air flow value equal to 71 l/minute 3.7 cm² @ 440 mmHg, and a WBT equal to 1.3 mH₂O.

The lowering of the WBT (water break through) by 61.8% is evident, whereas the variation in the air flow is negligible (+1.4%).

The following Table clearly indicates the advantages obtained by means of the process according to the present invention. It demonstrates, in fact, how the addition of HFE, i.e. the non-solvent-1 causes an increase in the WBT (water break through) by at least 10%. This increase has been demonstrated and is specified for membranes with a different porosity (from 0.2 to 3 microns) both supported and non-supported.

**Table 1**

| Membrane nominal porosity microns | | Thermal treatment | Carrier | PVDF | Solvent | Solvent | Air flow l/min | WBT m | Air Flow | WBT |
|---|---|---|---|---|---|---|---|---|---|---|
| | Example | °C | TNT | % | DMA % | HFE % | @ 3.7 cm² | H₂O | variation | variation |
| | | | | | | | @441 mmHg | | | |
| 0.2 | Ex. 2 | 25 | yes | 18 | 82 | 0 | 5.7 | 22 | -1.8% | 12.0% |
| 0.2 | Ex. 1 | 25 | yes | 18 | 79.5 | 2.5 | 5.6 | 25 | | |
| 1.2 | Ex. 4 | 55 | yes | 18 | 82 | 0 | 63 | 2.1 | -12.5% | 41.7% |
| 1.2 | Ex. 3 | 55 | yes | 18 | 72 | 10 | 56 | 3.6 | | |
| 1.2 | Ex. 5 | 55 | no | 16 | 74 | 10 | 61 | 5.2 | -5.2% | 16.1% |
| 1.2 | Ex. 6 | 55 | no | 16 | 69 | 15 | 58 | 6.2 | | |
| 3 | Ex. 8 | 60 | no | 16 | 84 | 0 | 71 | 1.3 | -1.4% | 61.8% |
| 3 | Ex. 7 | 60 | no | 16 | 74 | 10 | 70 | 3.4 | | |

## Claims

1. A process for the preparation of microporous membranes made of polyvinylidenefluoride (PVDF) which comprises the following passages:
a) preparation of a mixture of polymer (PVDF), solvent and non-solvent-1, wherein said mixture is selected from mixtures having the following composition:
i) 18 wt-% of polyvinylidenefluoride (PVDF), 79.5 wt-% of dimethylacetamide (DMA) as solvent and 2.5 wt-% of hydrofluoro-ether (HFE) as non-solvent-1; ii) 18 wt-% of polyvinylidenefluoride (PVDF), 72 wt-% of dimethylacetamide (DMA) and 10 wt-% of hydrofluoro-ether (HFE); iii) 16 wt-% of polyvinylidenefluoride (PVDF), 74 wt-% of dimethylacetamide (DMA) and 10 wt-% of hydrofluoro-ether (HFE) and iv) 16 wt-% of polyvinylidenefluoride (PVDF), 69 wt-% of dimethylacetamide (DMA) and 15 wt-% of hydrofluoro-ether (HFE);
b) bringing the mixture thus obtained to a temperature ranging from 15 to 80°C, for a time longer than 10 minutes;
c) mixing of the mixture until dissolution and formation of a solution;
d) possible spreading of the solution thus obtained on a carrier or imbibition of the carrier in the solution thus obtained;
e) immersion in a coagulation bath consisting of isopropyl alcohol as non-solvent-2 at a temperature ranging from 15°C to 70°C and subsequent formation of pores;
f) extraction of the residual solvent and non-solvent-2 in water;
g) drying of the membrane.

2. The process according to claim 1, **characterized in that** the spreading of the solution obtained in phase c) is effected on a non-woven fabric carrier, on a woven fabric carrier or without a carrier.

## Patentansprüche

1. Verfahren zur Herstellung von mikroporösen aus Polyvinylidenfluorid (PVDF) hergestellten Membranen, welches die nachfolgenden Schritte umfasst:
a) Herstellen einer Mischung aus Polymer (PVDF), Lösungsmittel und Nichtlösungsmittel-1, wobei die Mischung aus Mischungen mit der nachfolgenden Zusammensetzung ausgewählt wird:
i) 18 Gew.-% Polyvinylidenfluorid (PVDF), 79,5 Gew.-% Dimethylacetamid (DMA) als Lösungsmittel und 2,5 Gew.-% Hydrofluorether (HFE) als Nichtlösungsmittel-1, ii) 18 Gew.-% Polyvinylidenfluorid (PVDF), 72 Gew.-% Dimethylacetamid (DMA) und 10 Gew.-% Hydrofluorether (HFE), iii) 16 Gew.-% Polyvinylidenfluorid (PVDF), 74 Gew.-% Dimethylacetamid (DMA) sowie 10 Gew.-% Hydrofluorether (HFE) und iv) 16 Gew.-% Polyvinylidenfluorid (PVDF), 69 Gew.-% Dimethylacetamid (DMA) sowie 15 Gew.-% Hydrofluorether (HFE),
b) Bringen der so erhaltenen Mischung auf eine Temperatur in einem Bereich zwischen 15 und 80°C für eine Zeit von länger als 10 Minuten,
c) Vermischen der Mischung bis zur Auflösung und Ausbildung einer Lösung,
d) gegebenenfalls Verteilen der so erhaltenen Lösung auf einem Träger oder Imbibition des Trägers in der so erhaltenen Lösung,
e) Eintauchen in ein Koagulationsbad, welches aus Isopropylalkohol als Nichtlösungsmittel-2 besteht, bei einer Temperatur in einem Bereich zwischen 15°C und 70°C und nachfolgend Ausbildung von Poren,
f) Extraktion des restlichen Lösungsmittels und des Nichtlösungsmittels-2 in Wasser,
g) Trocknen der Membran.

2. Verfahren nach Anspruch 1, **dadurch gekennzeichnet, dass** das Verteilen der in dem Schritt c) erhaltenen Lösung auf einem nicht-gewebten Textilträger, auf einem gewebten Träger oder ohne einen Träger bewirkt wird.

## Revendications

1. Procédé de fabrication de membranes microporeuses faites de poly(fluorure de vinylidène) (PVDF), lequel procédé comporte les étapes suivantes ;
a) préparer un mélange de polymère PVDF, de solvant et d'un premier non-solvant, lequel mélange est choisi parmi les mélanges présentant les compositions suivantes :
i) 18 % en poids de poly(fluorure de vinylidène) (PVDF), 79,5 % en poids de diméthyl-acétamide (DMA) utilisé en tant que solvant, et 2,5 % en poids d'hydrofluoroéther (HFE) utilisé en tant que premier non-solvant,
ii) 18 % en poids de poly(fluorure de vinylidène) (PVDF), 72 % en poids de diméthyl-acétamide (DMA), et 10 % en poids d'hydrofluoroéther (HFE),
iii) 16 % en poids de poly(fluorure de vinylidène) (PVDF), 74 % en poids de diméthyl-acétamide (DMA), et 10 % en poids d'hydrofluoroéther (HFE),
iv) 16 % en poids de poly(fluorure de vinylidène) (PVDF), 69 % en poids de diméthyl-acétamide (DMA), et 15 % en poids d'hydrofluoroéther (HFE) ;
b) porter le mélange ainsi obtenu à une température de 15 à 80 °C et l'y maintenir pendant plus de 10 minutes ;
c) brasser le mélange jusqu'à dissolution et formation d'une solution ;
d) en option, étaler la solution ainsi obtenue sur un support, ou bien imprégner un support de la solution ainsi obtenue en l'y plongeant ;
e) plonger le tout dans un bain de coagulation constitué d'alcool isopropylique, utilisé en tant que deuxième non-solvant, à une température de 15 à 70 °C, et laisser ensuite des pores se former ;
f) éliminer les résidus de solvant et de deuxième non-solvant par extraction dans de l'eau ;
g) et faire sécher la membrane.

2. Procédé conforme à la revendication 1, **caractérisé en ce que** l'étalement de la solution obtenue dans l'étape (c) est effectué sur un support d'étoffe non-tissée, sur un support d'étoffe tissée, ou sans aucun support.
